# EUROPÄISCHE PATENTSCHRIFT

(11) **EP 4 627 308 B1**
(45) Veröffentlichungstag und Bekanntmachung des Hinweises auf die Patenterteilung: **08.07.2026**
(21) Anmeldenummer: 23798777.1
(22) Anmeldetag: 31.10.2023
(51) Int. Cl.: G01L 19/00, G01L 19/06

(54) **DRUCKSENSORELEMENT**
PRESSURE-SENSOR ELEMENT
ÉLÉMENT CAPTEUR DE PRESSION

(30) Priorität: 30.11.2022 DE 102022131802
(43) Veröffentlichungstag der Anmeldung: 08.10.2025
(73) Patentinhaber: KNORR-BREMSE Systeme für Nutzfahrzeuge GmbH, 80809 München (DE)
(72) Erfinder: PRAMS, Stefan, 85716 Unterschleissheim (DE)
(86) Internationale Anmeldenummer: PCT/EP2023/080308
(87) Internationale Veröffentlichungsnummer: WO 2024/115028

(56) Entgegenhaltungen:
- WO-A1-2008/104189
- DE-A1- 102008 026 611
- DE-A1- 102017 205 837
- US-A1- 2009 061 261
- US-B2- 10 018 527

## Beschreibung

Der vorliegende Ansatz bezieht sich auf ein Drucksensorelement gemäß dem Hauptanspruch.

Für Nutzfahrzeuge können Systeme eingesetzt werden, die für Ermöglichung ihrer Funktion Druckluft verwenden. Diese Systeme können dabei den Druck im System an verschiedensten Stellen messen, etwa um damit den Zustand des Systems zu kennen und Funktionen zu ermöglichen. Typischerweise wird hierbei ein Druckkanal in Verbindung mit einem Sensor gebracht, so dass der Druck im sich ergebenden Volumen vom sensitiven Bereich des Sensors erfasst werden kann. Häufig wir dabei eine Verengung der Maße vorgenommen (Druckkanal, eher größer, Verengung hin zum Sensiblen Bereich des Sensors z. B Membran). Dies hat u.a. den Vorteil, dass nur ein kleiner Teil der Elektronik mit dem Druck in Kontakt kommt, sodass zwar der Druck gemessen werden kann aber die entstehende Kraftbelastung (Kraft = Druck mal Fläche) auf Komponenten, Verbindungstechnik etc. geringer ist.

Da in den Systemen der Druck eines gasförmigen Mediums (Luft) gemessen werden soll ist es ein bekanntes Problem, wenn sich Flüssigkeiten oder Feststoffe im Bereich der Messung aufhalten, und in die Nähe des sensitiven Bereichs bzw. des Drucksensor gelangen. Unabhängig von der Herkunft der Flüssigkeit (etwa Kälteausfall aus der Druckluft, Störung in der Lufttrockungs- und Filtereinheit, etc.) können dadurch Probleme für die Druckmessung entstehen.

Probleme können dabei bereits im flüssigen Zustand oder durch Vereisung der Flüssigkeit im Sensor auftreten, beispielhaft an oder in einer der Verengungen. Dies kann
- den Messvorgang stören oder auch
- die Messelektronik dauerhaft schädigen,
was Folgen für Funktion und Sicherheit des Systems (Ausfalls, Flasche Messwerte, etc.) hat. Hier sei auch auf den Zusammenhang mit den typischen Umgebungsbedingungen (etwa hohe Temperatur Umfänge inkl. Minustemperaturen) der die Problematik begünstigt hingewiesen.

Das Dokument US 10 018 527 B2 offenbart einen Sensorverbund.

Das Dokument US 2009/061261 A1 offenbart ein Gerät zur Erfassung der physikalischen Gasmenge, ein brennstoffzellensystem und ein Fahrzeug.

Das Dokument WO 2008/104189 A1 offenbart eine Prozessgasanlage mit einem Sensor zur Erfassung einer Messgröße eiunes Prozessgases.

Vor diesem Hintergrund ist es die Aufgabe des vorliegenden Ansatzes ein verbessertes Drucksensorelement zu schaffen.

Der hier vorgestellte Ansatz schafft ein Drucksensorelement nach Anspruch 1.

Und einen Drucksensor kann vorliegend ein Sensor verstanden werden, der Druck in einem Gas erfassen kann. Unter einem Schutzelement kann ein Körper verstanden werden, der beispielsweise einen Kanal aufweist, durch welchen das Gas durchtreten und zum Drucksensor geführt werden kann. Das Schutzelement umfasst hierbei einen Kanal mit einem Breitbereich und einem Schmalbereich, wobei der Breitbereich einen größeren Querschnitt als der Schmalbereich aufweist. Insofern wirkt das Schutzelement als Führungselement für den Druck zunächst durch den Breitbereich und dann durch den Schmalbereich hin zum Drucksensor. Unter einem Rückhaltevorspung kann beispielsweise eine Nase, Erhebungung oder ein Wall-förmiges Element verstanden werden, welches an den Schmalbereich des Schutzelementes oder den Boden(-bereich bzw. -abschnitt) des Breitbereichs befestigt ist und sich in den Breitbereich des Schutzelementes hinein erstreckt, so dass es eine Barriere bildet, um Objekte oder Flüssigkeiten von einem Eintritt in den Schmalbereich abzuhalten, wenn diese sich an einem Randbereich oder Boden des Breitbereichs des Schutzelemenes befinden.

Der hier vorgestellte Ansatz bietet den Vorteil, durch die Verwendung dieses Rückhaltevorsprungs eine verbesserte Schutzfunktion zu realisieren, da beispielsweise die vorstehend genannten Flüssigkeiten an einem Eindringen vom Breitbereich in den Schmalbereich gehindert werden können. Dies führt dazu, dass das Drucksensorelement robuster gegenüber Störungen und/oder Beschädigungen wird.

Ein Ende des Rückhaltevorspungs weist einen größeren Abstand zum Drucksensor auf, als ein Bodenabschnitt des Breitbereichs. Unter einem Bodenbereich des Breitbereichs kann ein Abschnitt verstanden werden, der den Breitbereich an einem Übergang zum Schmalbereich abgrenzt. Dieser Ansatz bietet den Vorteil, dass der Rückhaltevorsprung eine Schwelle oder Stufe ausbildet, die nachfolgend das Eindringen der Flüssigkeit oder eines Objekts von einem Rand des Breitbereichs in den Schmalbereich verhindert.

Denkbar ist weiterhin eine Ausführungsform des hier vorgeschlagenen Ansatzes, bei der der Bodenbereich von dem Rückhaltevorspung einen fallenden oder schrägen Verlauf aufweist und/oder wobei der Bodenbereich benachbart zu dem Rückhaltevorspung einen größeren Abstand zu dem Drucksensor aufweist, als ein dem Rückhaltevorspung gegenüberliegender Rand des Bodenbereichs. Eine solche Ausführungsform bietet den Vorteil, durch die schräg oder fallend verlaufenden Abschnitt des Bodenbereiches Flüssigkeit vom Rückhaltevorsprung möglicht fernhalten zu können, wodurch sich ein geringerer Wartungsaufwand und somit eine reduzierte Störungsanfälligkeit eines solchen Drucksensorelementes ergibt.

Um möglichst eine Flüssigkeit von einem Eindringen in den Schmalbereich abhalten zu können, kann auch der Bodenbereich zumindest teilweise eine im Wesentlichen parallele Ausrichtung in Bezug auf die Ausrichtung des Drucksensors aufweisen und/oder bei dem der Rückhaltevorsprung als Erhebung oder Wall ausgeformt ist.

Gemäß einer weiteren Ausführungsform kann der Rückhaltevorspung umlaufend um eine Öffnung oder den Durchgang zum Schmalbereich angeordnet sein. Eine derartige Ausführungsform des hier vorgeschlagenen Ansatzes bietet den Vorteil einer besonders zuverlässigen Schutzwirkung des Rückhaltevorsprung, da dieser nun beispielsweise keine Zwischenräume mehr freilässt, durch welche Flüssigkeiten oder Objekte von einem Randbereich des Breitbereichs in den Schmalbereich eindringen könnten.

Für eine sehr effiziente Führung von beispielsweise an einer Wand des Breitbereichs abgeschiedener Flüssigkeit bilden Innenwände des Breitbereichs einen sich verjüngenden Kanal (z.B. konisch) und, optional, Innenwände des Schmalbereichs im Wesentlichen parallel zueinander angeordnet sein, insbesondere wobei die Wand des Schmalbereichs bündig mit einer Wand des Rückhaltevorspungs sind.

Von Vorteil ist weiterhin eine Ausführungsform des hier vorgeschlagenen Ansatzes, bei der eine Innenwand des Schmalbereichs und/oder eine Innenwand des Breitbereichs (120) eine Stufe aufweist, insbesondere wobei die Stufe eine von dem Durchgang zum Randbereich der Innenwand des Breitbereichs oder des Schmalbereichs abfallende Steigung aufweist. Eine solche Ausführungsform bietet den Vorteil, dass durch die Antennewand des Stahlbereich ausgebildete Stufe nochmals eine Schutzwirkung erreicht werden kann, selbst wenn Flüssigkeiten von dem Breitbereichen in Schmalbereich das Schutzelementes gelangt sind.

Auch kann gemäß einer weiteren Ausführungsform des hier vorgeschlagenen Ansatzes das Schutzelement zumindest teilweise zylindrisch ausgebildet sein und/oder zumindest teilweise ein Kunststoffmaterial und/oder ein Gummimaterial aufweisen. Solche Ausführungsform bietet den Vorteil der besonders einfachen Herstellung, beispielsweise mittels bekannten Gußverfahren oder Spritzverfahren.

Besonders gut geschützt ist der Drucksensor gemäß einer Ausführungsform, wenn er in einem Kammerabschnit des Schutzelementes eingebettet ist. Eine solche Ausführungsform bietet den Vorteil, dass Schutzelement derart auszugestalten, dass auch der Drucksensor umgebenen wird, so dass Umwelteinflüsse sehr geringe Wirkung auf den Drucksensor ausüben können und somit das derart hergestellte Drucksensorelement sehr robust und stabil ausgestaltet werden kann.

Auch kann gemäß einer weiteren Ausführungsform der Schmalbereich asymmetrisch zu dem Breitbereich angeordnet sein. Hierdurch kann eine sehr gute Führung von abgeschiedener Feuchte oder ein guter Schutz von einem Eindringen von Fremdkörpern in den Schmalbereich ermöglicht werden.

Besonder günstig ist eine Ausführungsform des hier vorgestellten Ansatzes, bei dem an der Innenseite einer Wand des Breitbereichs, insbesondere an eirner dem Schmalbereich zugewandten Ende, eine hydrophile Oberflächenstruktur angebracht ist. Eine solche Ausführungsform bietet den Vorteil, Flüssigkeiten durch eine solche Oberflächenstruktur im Bereich des Breitbereichs halten zu können, so dass ein Eindringen dieser Flüssigkeiten in der Schmalbereich effektiv vermieden werden kann.

Alternativ oder zusätzlich kann gemäß einer anderen Ausführungsforman der Innenseite einer Wand des Schmalbereichs eine hydrophobe Oberflächenstruktur angebracht sein und/oder bei dem das Schutzelement aus einem hydrophoben Material besteht oder zumindest teilweise ein hydrophobes Material aufweist. Auch durch eine solche Ausführungsform lässt sich der Grundgedanke dieser Erfindung schnell und effizient realisieren, da nun auch durch die hydrophobe Oberflächenstruktur im Innenbereich des Schmalbereichs möglichst verhindert oder vermieden werden kann, dass eine Flüssigkeit in den Schmalbereich eindringt.

Verschiedene Ausführungsbeispiele des hier vorgestellten Ansatzes werden nachfolgend mit Bezug zu den unterschiedlichen Figuren näher beschrieben. Es zeigen:
Figur 1 eine Schnittdarstellung durch ein erstes Ausführungsbeispiels des hier vorgestellten Drucksensorelementes;
Figur 2 eine Schnittdarstellung durch ein zweites Ausführungsbeispiel des hier vorgestellten Drucksensorelementes;
Figur 3 eine Schnittdarstellung durch ein drittes Ausführungsbeispiele des hier vorgestellten Drucksensorelementes;
Figur 4 eine Schnittdarstellung durch ein viertes Ausführungsbeispiel des hier vorgestellten Drucksensorelementes;
Figur 5 eine Schnittdarstellung durch ein fünftes Ausführungsbeispiels des hier vorgestellten Drucksensorelementes;
Figur 6 eine Aufsichtdarstellung auf das fünfte Ausführungsbeispiel des hier vorgestellten Drucksensorelementes;
Figur 7 eine Schnittdarstellung durch ein sechstest Ausführungsbeispiele des hier vorgestellten Drucksensorelementes;
Figur 8 eine Schnittdarstellung durch ein siebtes Ausführungsbeispiel des hier vorgestellten Drucksensorelementes; und
Figur 9 eine Schnittdarstellung durch ein achtes Ausführungsbeispiel des hier vorgestellten Drucksensorelementes.

Für gleiche oder ähnliche Elemente werden in der nachfolgenden Beschreibung gleiche oder ähnliche Bezugszeichen verwendet, wobei aus Gründen der Vereinfachung auf eine wiederholte Beschreibung verzichtet wird.

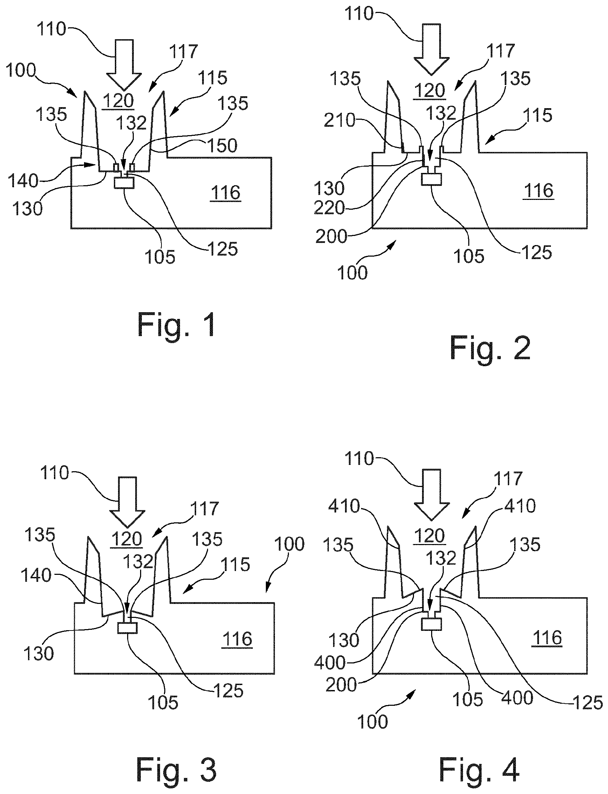

Figur 1 zeigt eine Schnittdarstellung durch ein Ausführungsbeispiel des hier vorgestellten Drucksensorelementes 100. Das Drucksensorelement 100 umfasst einen Drucksensor 105, der beispielsweise ausgebildet ist, um einen Druck eines Gases 110 zu erfassen. Um nun die vorstehend genannte Problematik zu umgehen, dass ein Eindringen von Flüssigkeit oder Objekten auf oder in den unmittelbaren Bereich um den Drucksensor die Funktionsfähigkeit des Drucksensorelementes 100 beeinträchtigt, wird entsprechend dem hier vorgestellten Ansatz ein Schutzelement 115 eingesetzt, in das der Drucksensor 105 beispielsweise in einen Kammerabschnitt 116 eingebettet ist und das einen Kanal 117 umfasst, der in einen Breitbereich 120 und einen Schmalbereich 125 unterteilt ist, wobei der Breitbereich 120 einen größeren Querschnitt aufweist, als der Schmalbereich 125. An einem dem Drucksensor 105 zugewandten Ende des Breitbereichs 120 ist ein Bodenabschnitt oder Bodenbereich 130 vorgesehen, an welchen im Bereich eines Durchgangs 132 vom Breitbereich 120 zum Schmalbereich 120 eine Rückhaltevorsprung 135 oder mehrere entsprechende Rückhaltevorsprünge 135 vorgesehen sind, die beispielsweise auch einen umlaufenden Rückhaltevorsprung um diesen Durchgang vom Schmalbereich 125 in den Bereitbereich 120 bilden.

Wird nun beispielsweise eine Flüssigkeit aus dem Gas 110 durch Kondensation an einer Wand des Schutzelement im Breitbereich 120 abgeschieden oder es gelangt ein Gegenstand in dem Breitbereich 120 des Schutzelementes, kann durch das Vorsehen des Rückhaltevorsprungs 135 sehr einfach verhindert werden, dass sich eine im Randbereich oder Randabschnitt 140 des Bodenbereichs 130 befindliche Flüssigkeit oder ein dort befindlicher Gegenstand durch einen Strom des Gases 110 zu einer Öffnung in den Schmalbereich 125 gelangt und somit die Funktionsfähigkeit des Drucksensors 105 beeinträchtigen kann. Durch die Anordnung des Rückhaltevorsprungs 135 oder der Rückhaltevorsprünge 135 lässt sich nun mit technisch sehr einfachen Mitteln eine solche Schutzfunktion für den Drucksensor 105 realisieren.

Günstig ist es weiterhin auch, wenn das Schutzelement 115 derart ausgestaltet ist, dass es den Drucksensor 105 zumindest teilweise, günstiger Weise vollständig umgibt, so dass beispielsweise der Drucksensor 105 in einem Kammerabschnitt 117 in das Schutzelement 115 eingebettet ist. Auf diese Weise kann sehr sicher und zuverlässig der Drucksensor 105 gegen Umwelteinflüsse wie auch gegen Stöße oder Beschädigungen geschützt werden. Besonders kostengünstig lässt sich das Schutzelement 115 auch herstellen, wenn es aus einem Kunststoffmaterial oder aus Kautschuk ausgeformt, insbesondere gespritzt oder gegossen wird. Vorteilhaft ist es weiterhin, wenn auf einer Innenwand des Schutzelementes 115 im Breitbereich 120 eine hydrophile Oberflächenstruktur 150 angeordnet ist. Hierdurch kann beispielsweise eine Flüssigkeit, die an dieser Innenwand hinabläuft, auf dieser hydrophilen Oberflächenstruktur adsorberit oder gehalten werden, sodass verhindert werden kann, dass die Flüssigkeit in den Schmalbereich 125 hineinläuft. Die hydrophile Oberlfächenstruktur kann beispielsweise durch ein Einätzen von Gräben oder Rillen in die Wand des Schutzelementes 115 im Breitbereich 120 erfolgen oder auch durch das Aufbringen einer speziellen hydrophilen Schicht. Denkbar ist weiterhin auch, dass in die Wand des Schutzelementes 115 im Schmalbereich 125 eine hydrophobe Oberflächenstruktur ein- oder aufbebracht wird, wie dies aus Gründen der Übersichtlichkeit in dem in der Figur 2 dargestellten Ausführungsbeispiel näher dargestellt ist.

Figur 2 zeigt eine Schnittdarstellung durch einen zweites Ausführungsbeispiel des Drucksensorelementes 100. Im Unterschied zu dem in der Figur 1 dargestellten Ausführungsbeispiel umfasst nun der Schmalbereich 125 eine Stufe 200, in dem sich der Schmalbereich 125 zum Drucksensor 105 in weiter verjüngt. Auch durch eine solche Ausgestaltung der Stufe 200 lässt sich eine nochmalige Erhöhung der Schutzfunktion bewirken, da beispielsweise größere Objekte im oberen, weiteren Bereich des Schmalbereichs 125 festgehalten werden und so nicht auf Sensorbereich des Drucksensors 105 gelangen können. Auch können beispielsweise Flüssigkeiten, sollten Sie doch in den Schmalbereich 125 eindringen, können Sie noch immer an der Stufe 200 abgesetzt werden, so dass ein Passieren dieser Flüssigkeit direkt auf den Drucksensor 105 vermieden werden kann. Zugleich ist erkennbar, dass der Rückhaltevorsprung 135 bzw. die Rückhaltevorsprünge 135 planar oder bündig mit einer Öffnung bzw. dem Durchgang des Schmalbereichs 125 in den Breitbereich 120 ausgestaltet sind. Auf diese Weise lassen sich ebenfalls die einzelnen Komponenten des Schutzelementes 115 technisch sehr einfach herstellen. Dargestellt ist in der Figur 2 ferner eine hydrophile Oberflächenstruktur 210 an einem Randbereich der Innenwand des Breitbereichs 120, die dazu dienen kann, eine eventuell in dem Breitbereich 120 abgeschiedene Flüsseigkeit an dieser hydrophilen Oberflächenstruktur 210 zu binden oder zu lagern. Alternativ oder zusätzlich kann auch an einer Innenwand des Schmalbereichs 125 eine hydrophobe Oberflächenstruktur 220 angeordnet sein, um durch das Vorsehen einer solchen Struktur ein tieferes Eindringen von Flüssigkeit in den Schmalbereich 125 zu verhindern. Die hydrophile Oberflächenstruktur 210 und die hydrophobe Oberflächenstruktur 220 können beispielsweise durch eine Beschichtung und/oder durch ein Einätzen einer Struktur in die Wand des jeweiligen Teils des Schutzelementes 115 realisiert sein.

Figur 3 zeigt eine Schnittdarstellung durch ein drittes Ausführungsbeispiel des hier vorgeschlagenen Drucksensorelementes 110. Im Unterschied zu den in den Figuren 1 und 2 dargestellten Ausführungsbeispielen ist nun der Bodenbereich 130 des Breitbereichs 120 schräg ausgestaltet, so dass dieser Bodenbereich 130 an einer Öffnung bzw. dem Durchgang 132 des Schmalbereichs 125 in den Breitbereich 120 einen größeren Abstand zum Drucksensor 105 aufweist, als im Randbereich 140 an einer Seitenwand des Schutzelementes 115 des Breitbereichs 120. Durch einen derart schräg verlaufenden Bodenbereich 130 lässt sich einerseits die Schutzfunktion durch den Rückhaltevorsprung 135 ebenfalls realisieren. Zugleich lässt sich eine solche Ausführungsform des Schutzelement des 115 technisch sehr einfach herstellen, da beispielsweise die in Entformbarkeit eines solchen Schutzelementes 115 durch die Vermeidung von kleinen Abschnitten dieses Schutzelementes 115 verbessert wird.

Figur 4 zeigt eine Schnittdarstellung durch ein viertes Ausführungsbeispiel des hier vorgestellten Drucksensorelementes 100. Im Gegensatz zu dem in der Figur 3 dargestellten Ausführungsbeispiel umfasst das in der Figur 4 dargestellte Ausführungsbeispiel des Drucksensorelementes 100 ebenfalls eine Stufe 200 im Schmalbereich 125, wie es auch bereits in dem in der Figur 2 dargestellten Ausführungsbeispiel beschrieben und dargestellt ist. Die Funktion dieser Stufe 200 entspricht dabei im Wesentlichen der Funktionweise der Stufe 200, wie es in dem Ausführungsbeispiel gemäß der Figur 2 näher beschrieben wurde. Weiterhin ist zu erkennen, dass die Innenwände 400 des Schmalbereichs 125 im Wesentlichen parallel ausgebildet sind, um eine möglicht fehlerfreie Druckmessung durch den Drucksensor 105 zu ermöglichen. Um eine möglichst effiziente Abschneidung von eventuell in dem Gas 110 enthaltener Flüssigkeit zu ermöglichen, können auch die Innenwand 410 oder Innenwände im Breitbereich 120 konisch bzw. zu einem sich verjüngenden Kanal 117 ausgebildet sein, um sich an dieser Wand bzw. diesen Wänden abscheidene Flüssigkeit in den Bodenabschnitt 130 zu leiten und dort zu sammeln.

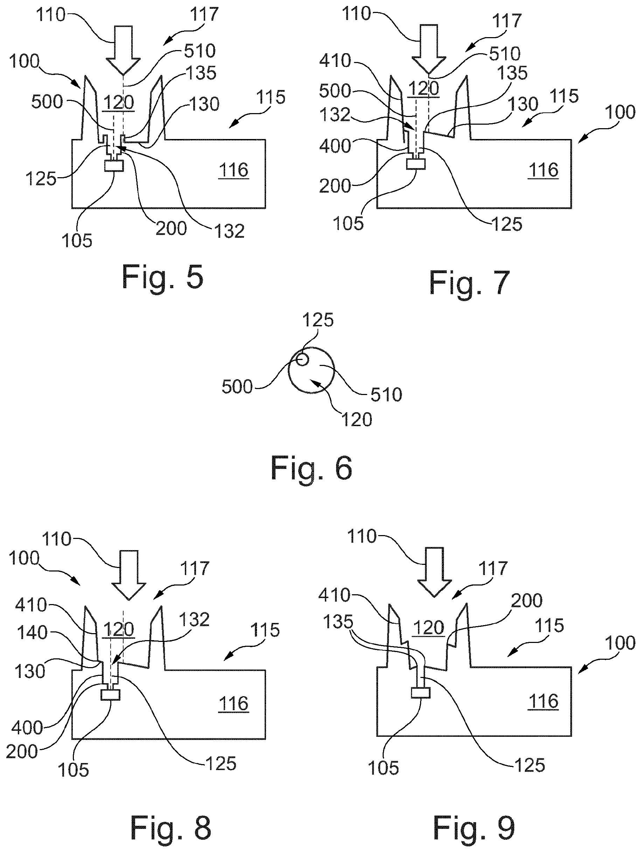

Figur 5 zeigt eine Schnittdarstellung durch ein fünftes Ausführungsbeispiel des hier vorgestellten Drucksensorelementes 100. Zu erkennen ist hierbei, dass der Schmalbereich 125 asymmetrisch in Bezug zum Breitbereich 120 liegt, d h. eine (Symmetrie-) Achse 500 durch den Schmalbereich 125 ist beispielsweise gegenüber einer (Symmetrie-) Achse 510 durch den Breitbereich 120 verschoben oder versetzt angeordnet.

Figur 6 zeigt eine schematische Aufsichtsdarstellung auf den Breitbereich 120 und den Schmalbereich 125, wobei die Verschiebung oder der Versatz der Achse 510 des Schmalbereichs 125 in Bezug zu der Achse 510 des Breitbereichs 120 erkennbar ist. Besonders dort, wo der Schmalbereich 125 sehr eng oder sogar bündig zum Breitbereich 120 ist, kann eine solche Anordnung sehr hilfreich zur Vermeidung eines Eindringens von Verunreinigungen in den Schmalbereich 125 sein.

Figur 7 zeigt eine Schnittdarstellung durch ein sechstes Ausführungsbeispiel des hier vorgestellten Drucksensorelementes 100. Dabei ist der Bodenbereich 130 wiederum schräg angeordnet, wobei jedoch nun der Bodenbereich 130 in dem Teil, an dem die Innenwand 400 des Schmalbereichs 125 näher an der Innenwand 410 des Breitbereichs 120 ist, ebenfalls schräg in Richtung des Durchgangs 132 abfällt. Hierdurch kann beispielsweise ein nahezu bündiger Übergang zwischen dem Breitbereich 120 und Schmalbereich 125 erreicht werden.

Figur 8 zeigt eine Schnittdarstellung durch ein siebtes Ausführungsbeispiel des hier vorgestellten Drucksensorelementes 100. Im Unterschied zu dem in der Figur 7 dargestellten Ausführungsbeispiel des Drucksensorelementes 100 ist nun derjenige Teil des Bodenbereichs 130, bei dem die Innenwand 400 des Schmalbereichs 124 näher an der Innenwand 410 des Breitbereichs 120 liegt nicht mehr in Richtung des Durchgangs 132 hingeneigt, sondern von einem Randbereich 140 zum Rückhaltevorsprung 135 in ansteigend. Hierdurch kann beispielsweise eine Flüssigkeit, die an der Innenwand 410 des Breitbereichs 120 in abfließt, im Randbereich 140 aufgefangen werden. In einer solchen Ausführung, die in einer Vilkanform jedoch mit verschiedenen Steigungen ausgeführt ist, kann aufgrund der asymmetrischen Lochposition, d.h. der asymmetrischen Position des Schmalbereichs 120 in Bezug zum Breitbereich 120, eine optimierte Feuchteführung und/oder Feuchtesammlung erfolgen.

Figur 9 zeigt eine Schnittdarstellung durch ein achtes Ausführungsbeispiel des hier vorgestellten Drucksensorelementes 100. Im Unterschied zu dem in der Figur 3 dargestellten Ausführungsbeispiel des Drucksensorelementes 100 ist nun auch eine Stufe 200 in einer Innenwand 410 des Breitbereichs 120 vorgesehen. Zusätzlich ist ebenfalls wieder eine versetzte Anordnung des Schmalbereichs 125 in Bezug zum Breitbereichs 120 vorgesehen.

Zusammenfassend ist somit anzumerken, dass somit anzumerken, das mit dem hier vorgestellten Ansatz ein Drucksensor mit einer Schutzfunktion offenbart und näher beschrieben wird. Der grundsätzliche Erfindungsgedanke mit daraus resultierenden Vorteilen kann darin gesehen werden, dass nun ist ein Drucksensor mit einer nahe des sensitiven Bereichs (örtlich im sogenannten Druckkamin oder Schutzelement) einen Schutz seiner Funktion gegen Feuchte/Flüssigkeiten umfasst. Der Begriff "Schutz" ist dabei so zu verstehen, dass durch ihn die Wahrscheinlichkeit des Eintretens der oben beschriebenen negativen Folgen verringert oder das Eintreten dieser Folgen ganz verhindert wird. Ebenso können Folgen für die Funktion, die sich aus einer Vereisung ergeben, möglichst effizient vermeiden werdne. Der Schutz kann geometrisch so ausgeprägt sein, dass das Eindringen von Flüssigkeit, die sich etwa im Inneren des Kamins bzw. Schutzelementes sammelt, in den sensitiven Bereich (bzw. die Verengung) erschwert wird. Dies kann durch ein ganz oder teilweise Umschließen der Verengung durch den Schutz bzw. den Rückhaltevorsprung geschehen, (geschlossener Kreis oder auch nur Teilform) die gegebenenfalls am inneren Rand des Kamines bzw. des Schmalbereichs abschließt. Dadurch wird die Einzugsfläche für Feuchtigkeit enorm verringert. Ergänzend oder alternativ kann der Schutz bzw. Rückhaltevorsprung erweitert werden, indem die Oberfläche des Schutzes (des Rückhaltevorsprungs) und optional die Innenflächen der Verengung hydrophob ausgeführt werden. Dies kann beispielsweise durch die Materialauswahl und/oder eine Micro-Strukturierung der Oberfläche geschehen. Ebenso ist eine Kombination aus hydrophoben Bereichen (näher am sensitiven Bereich) und hydrophilen Bereichen (weiter entfernt vom sensitiven Bereich, etwa in den Ecken des Druckkamins) möglich. Die Vorteile einer solchen Ausführungsform können wie folgt aufgelistet
+Höhere Sicherheit des Systems
+Höhere Verfügbarkeit des Systems
+Höhere Freiheit von temporären Störungen
+Vermeidung von langfristiger Schädigung des Sensors
+Fernhalten nicht nur von Wasser sondern auch anderen Flüssigkeiten bzw. im Wasser enthaltene Stoffe
+Geringere Qualitätsprobleme und Feldrückläufer

### BEZUGSZEICHENLISTE

- 100: Drucksensorelement
- 105: Drucksensor
- 110: Gas, Luft
- 115: Schutzelement
- 116: Kammerabschnitt
- 117: Kanal
- 120: Breitbereich
- 125: Schmalbereich
- 130: Bodenbereich, Bodenabschnitt
- 132: Durchgang
- 135: Rückhaltevorsprung, Schutzwand
- 140: Randbereich, Randabschnitt
- 150: hydrophile Oberflächenstruktur

- 200: Stufe
- 210: hydrophile Oberflächenstruktur
- 220: hydrophobe Oberlfächenstruktur

- 400: Innenwand des Schmalbereichs
- 410: Innenwand des Breitbereichs

- 500: (Symmetrie-) Achse durch den Schmalbereich
- 510: (Symmetrie-) Achse durch den Breibereich

## Patentansprüche

1. Drucksensorelement (100) mit folgenden Merkmalen:
- einem Drucksensor (105) zur Erfassung eines Drucks in einem Gas (110); und
- ein Schutzelement (115), das einen Kanal (117) mit einem Breitbereich (120) und einem Schmalbereich (125) ausbildet, wobei der Schmalbereich (125) an den Drucksensor (105) angrenzt und einen geringeren Querschnitt als der Breitbereich (120) aufweist, wobei das Schutzelement (115) derart an dem Drucksensor (105) angenordnet ist, dass das Gas (110) durch den Breitbereich (120) und den Schmalbereich (125) zu dem Drucksensor (105) geführt wird und wobei das Schutzelement (115) ferner einen Rückhaltevorspung (135) aufweist, die an einem Durchgang (132) zwischen dem Breitbereich (120) und dem Schmalbereich (125) angeordnet ist und in den Breitbereich (120) hineinragt, um einen Eintritt von Flüssigkeit aus einem Randabschnitt (140) des Breitbereichs (125) in den Schmalbereich (125) zu verhindern, wobei ein Ende des Rückhaltevorspungs (135) einen größeren Abstand zum Drucksensor (105) aufweist, als ein Bodenbereich (130) des Breitbereichs (120),
**dadurch gekennzeichnet, dass**
Innenwände (410) des Breitbereichs (125) einen sich verjüngenden Kanal (117) in Richtung Bodenbereichs (130) des Breitbereichs (120) bilden.

2. Drucksensorelement (100) gemäß Anspruch 1, **dadurch gekennzeichnet, dass** der
Bodenbereich (130) von dem Rückhaltevorspung (135) einen fallenden oder schrägen Verlauf aufweist und/oder wobei der Bodenbereich (130) benachbart zu dem Rückhaltevorspung (135) einen größeren Abstand zu dem Drucksensor (105) aufweist, als ein dem Rückhaltevorspung (135) gegenüberliegender Rand des Bodenbereichs.

3. Drucksensorelement (100) gemäß einem der vorangegangenen Ansprüche 1 oder 2, bei dem der Bodenbereich (130) zumindest teilweise eine im Wesentlichen parallele Ausrichtung in Bezug auf die Ausrichtung des Drucksensors (105) aufweist und/oder bei dem der Rückhaltevorsprung (135) als Erhebung oder Wall ausgeformt ist.

4. Drucksensorelement (100) gemäß einem der vorangegangenen Ansprüche, **dadurch gekennzeichnet, dass** der Rückhaltevorspung (135) umlaufend um den Druchgang (132) in den Schmalbereich (125) angeordnet ist.

5. Drucksensorelement (100) gemäß einem der vorangegangenen Ansprüche, **dadurch gekennzeichnet, dass** Innenwände (420) des Schmalbereichs (125) im Wesentlichen parallel zueinander angeordnet sind, und/oder wobei die Wand des Schmalbereichs (125) bündig mit dem Rückhaltevorspung (135) ist.

6. Drucksensorelement (100) gemäß einem der vorangegangenen Ansprüche, **dadurch gekennzeichnet, dass** eine Innenwand (410) des Schmalbereichs (125) und/oder eine Innenwand (400) des Breitbereichs (120) eine Stufe (200) aufweist, insbesondere wobei die Stufe (200) eine von dem Durchgang (132) zum Randbereich (140) der Innenwand (400, 410) des Breitbereichs (120) oder des Schmalbereichs (125) abfallende Steigung aufweist.

7. Drucksensorelement (100) gemäß einem der vorangegangenen Ansprüche, **dadurch gekennzeichnet, dass** das Schutzelement (115) zumindest teilweise zylindrisch ausgebildet ist und/oder zumindest teilweise ein Kunststoffmaterial und/oder ein Gummimaterial aufweist.

8. Drucksensorelement (100) gemäß einem der vorangegangenen Ansprüche, bei dem der Drucksensor (105) in einem Kammerabschnit (116) des Schutzelementes (115) eingebettet ist.

9. Drucksensorelement (100) gemäß einem der vorangegangenen Ansprüche, bei dem der Schmalbereich (125) asymmetrisch zu dem Breitbereich (120) angeordnet ist.

10. Drucksensorelement (100) gemäß einem der vorangegangenen Ansprüche, bei dem an der Innenseite (410) einer Wand des Breitbereichs (120), insbesondere an einer dem Schmalbereich (125) zugewandten Ende, eine hydrophile Oberflächenstruktur (150, 210) angebracht ist.

11. Drucksensorelement (100) gemäß einem der vorangegangenen Ansprüche, bei dem an der Innenseite (400) einer Wand des Schmalbereichs (125) eine hydrophobe Oberflächenstruktur (400) angebracht ist und/oder bei dem das Schutzelement (115) aus einem hydrophoben Material besteht oder zumindest teilweise ein hydrophobes Material aufweist.

## Claims

1. A pressure-sensor element (100) having the following features:
- a pressure sensor (105) for sensing a pressure in a gas (110); and
- a protective element (115) which forms a channel (117) with a wide region (120) and a narrow region (125), wherein the narrow region (125) adjoins the pressure sensor (105) and has a smaller cross-section than the wide region (120), wherein the protective element (115) is arranged on the pressure sensor (105) in such a way that the gas (110) is passed through the wide region (120) and the narrow region (125) to the pressure sensor (105), and wherein the protective element (115) further comprises a retaining projection (135) which is arranged at a passage (132) between the wide region (120) and the narrow region (125) and protrudes into the wide region (120) in order to prevent liquid from an edge portion (140) of the wide region (125) from entering the narrow region (125), wherein one end of the retaining projection (135) has a greater distance to the pressure sensor (105) than a base region (130) of the wide region (120), **characterized in that**
inner walls (410) of the wide region (125) form a tapered channel (117) extending towards the base region (130) of the wide region (120).

2. The pressure-sensor element (100) as claimed in claim 2, **characterized in that** the base region (130) has a falling or inclined course from the retaining projection (135), and/or wherein the base region (130) adjacent to the retaining projection (135) has a greater distance to the pressure sensor (105) than an edge of the base region opposite the retaining projection (135).

3. The pressure-sensor element (100) as claimed in one of the preceding claims 1 or in which the base region (130) has at least partially a substantially parallel orientation with respect to the orientation of the pressure sensor (105), and/or in which the retaining projection (135) is shaped as an elevation or ridge.

4. The pressure-sensor element (100) as claimed in one of the preceding claims, **characterized in that** the retaining projection (135) is arranged circumferentially around the passage (132) into the narrow region (125).

5. The pressure-sensor element (100) as claimed in one of the preceding claims, **characterized in that** inner walls (410) of the wide region (125) are arranged substantially parallel to each other, and/or wherein the wall of the narrow region (125) is flush with the retaining projection (135).

6. The pressure-sensor element (100) as claimed in one of the preceding claims, **characterized in that** an inner wall (410) of the narrow region (125) and/or an inner wall (400) of the wide region (120) has a step (200), in particular wherein the step (200) has a gradient falling from the passage (132) to the edge region (140) of the inner wall (400, 410) of the wide region (120) or the narrow region (125).

7. The pressure-sensor element (100) as claimed in one of the preceding claims, **characterized in that** the protective element (115) is at least partially cylindrical and/or at least partially comprises a plastics material and/or a rubber material.

8. The pressure-sensor element (100) as claimed in one of the preceding claims, in which the pressure sensor (105) is embedded in a chamber portion (116) of the protective element (115).

9. The pressure-sensor element (100) as claimed in one of the preceding claims, in which the narrow region (125) is arranged asymmetrically with respect to the wide region (120).

10. The pressure-sensor element (100) as claimed in one of the preceding claims, in which a hydrophilic surface structure (150, 210) is provided on the inner side (410) of a wall of the wide region (120), in particular at an end facing the narrow region (125).

11. The pressure-sensor element (100) as claimed in one of the preceding claims, in which a hydrophobic surface structure (400) is provided on the inner side (400) of a wall of the narrow region (125), and/or in which the protective element (115) is made of a hydrophobic material or at least partially comprises a hydrophobic material.

## Revendications

1. Elément capteur de pression (100) avec les caractéristiques suivantes :
- un capteur de pression (105) pour la détection d'une pression dans un gaz (110) ; et
- un élément de protection (115) qui forme un canal (117) avec une zone large (120) et une zone étroite (125), dans lequel la zone étroite (125) est contiguë au capteur de pression (105) et présente une section transversale plus petite que la zone large (120), dans lequel l'élément de protection (115) est agencé au niveau du capteur de pression (105) de telle manière que le gaz (110) est guidé à travers la zone large (120).et la zone étroite (125) jusqu'au capteur de pression (105) et dans lequel l'élément de protection (115) présente de plus une saillie de retenue (135) qui est agencée au niveau d'un passage (132) entre la zone large (120) et la zone étroite (125) et pénètre dans la zone large (120) afin d'empêcher une entrée de liquide depuis une section de bord (140) de la zone large (125) dans la zone étroite (125), dans lequel une extrémité de la saillie de retenue (135) présente une distance plus grande par rapport au capteur de pression (105) qu'une zone de fond (130) de la zone large (120),
**caractérisé en ce que**
des parois intérieures (410) de la zone large (125) forment un canal (117) se rétrécissant en direction de la zone de fond (130) de la zone large (120).

2. Elément capteur de pression (100) selon la revendication 1, **caractérisé en ce que** la zone de fond (130) présente à partir de la saillie de retenue (135) une étendue descendante ou inclinée et/ou dans lequel la zone de fond (130) présente de manière contiguë à la saillie de retenue (135) une plus grande distance par rapport au capteur de pression (105) qu'un bord opposé à la saillie de retenue (135) de la zone de fond.

3. Elément capteur de pression (100) selon l'une quelconque des revendications précédentes 1 ou pour lequel la zone de fond (130) présente au moins partiellement une orientation sensiblement parallèle par rapport à l'orientation du capteur de pression (105) et/ou pour lequel la saillie de retenue (135) est réalisée comme élévation ou mur.

4. Elément capteur de pression (100) selon l'une quelconque des revendications précédentes, **caractérisé en ce que** la saillie de retenue (135) est agencée de manière circonférentielle autour du passage (132) dans la zone étroite (125).

5. Elément capteur de pression (100) selon l'une quelconque des revendications précédentes, **caractérisé en ce que** des parois intérieures (420) de la zone étroite (125) sont agencées sensiblement parallèlement l'une par rapport à l'autre et/ou dans lequel la paroi de la zone étroite (125) est à fleur avec la saillie de retenue (135).

6. Elément capteur de pression (100) selon l'une quelconque des revendications précédentes, **caractérisé en ce qu'**une paroi intérieure (410) de la zone étroite (125) et/ou une paroi intérieure (400) de la zone large (120) présente un niveau (200), en particulier dans lequel le niveau (200) présente une pente inclinée depuis le passage (132) jusqu'à la zone de bord (140) de la paroi intérieure (400, 410) de la zone large (120) ou de la zone étroite (125).

7. Elément capteur de pression (100) selon l'une quelconque des revendications précédentes, **caractérisé en ce que** l'élément de protection (115) est réalisé au moins partiellement de manière cylindrique et/ou présente au moins partiellement un matériau plastique et/ou un matériau en caoutchouc.

8. Elément capteur de pression (100) selon l'une quelconque des revendications précédentes, pour lequel le capteur de pression (105) est intégré dans une section de chambre (116) de l'élément de protection (115).

9. Elément capteur de pression (100) selon l'une quelconque des revendications précédentes, pour lequel la zone étroite (125) est agencée de manière asymétrique par rapport à la zone large (120).

10. Elément capteur de pression (100) selon l'une quelconque des revendications précédentes, pour lequel une structure de surface (150, 210) hydrophile est montée au niveau du côté intérieur (410) d'une paroi de la zone large (120), en particulier au niveau d'une extrémité tournée vers la zone étroite (125).

11. Elément capteur de pression (100) selon l'une quelconque des revendications précédentes, pour lequel une structure de surface (400) hydrophobe est montée au niveau du côté intérieur (400) d'une paroi de la zone étroite (125) et/ou pour lequel l'élément de protection (115) se compose d'un matériau hydrophobe ou présente au moins partiellement un matériau hydrophobe.
